# EUROPEAN PATENT APPLICATION

(11) **EP 4 679 352 A1**
(43) Date of publication of application: **14.01.2026**
(21) Application number: 23927333.7
(22) Date of filing: 10.03.2023
(51) Int. Cl.: G06Q 50/04

(54) **AUTHENTICATION SYSTEM AND METHOD**

(71) Applicant: Resonac Corporation, Tokyo 105-7325 (JP)
(72) Inventor: FUKUHARA, Kiichi, Tokyo 105-8518 (JP); CHEN, Li-Hsin, Tokyo 105-8518 (JP); MOROSAKI, Tomohito, Tokyo 105-8518 (JP)
(74) Representative: Hoffmann Eitle
(86) International application number: PCT/JP2023/009458
(87) International publication number: WO 2024/189709

(57) **Abstract**

An information processing terminal (10) sends preliminary application information including a planned value of biomass content to a certification server 40 (S10), the certification server 40 assigns an application ID to the preliminary application information and stores the preliminary application information and the application ID in an application DB 48 (S12) and notifies the information processing terminal 10 of the application ID (S14), the information processing terminal 10 creates main application information including the application ID and an actual measured value of biomass content calculated by acquiring a measurement value of usage of each material and sends the main application information to the certification server 40 (S16), and the certification server 40 checks the preliminary application information against the main application information (S20) and, when certification is granted, sends a certificate certifying that the product includes biomass to the information processing terminal 10 (S28).

## Description

### Technical field

This disclosure relates to a certification system and a certification method.

### Background art

The problem of global warming in recent years has led to a demand for carbon neutrality in product production. For example, the use of biological resources (biomass) as materials for products is being promoted. Products that use biomass are given the Biomass Mark to indicate that the products are environmentally friendly products whose quality and safety comply with relevant laws, criteria, and standards (see Non-patent Document 1).

Furthermore, as a technology relating to the issuance of certificates for certifying the transaction of assets such as electrical power produced by renewable energy, a system for preventing the double issuance of certificates has been proposed (see Patent Document 1).

### Citation list

### Patent Literature

Patent Literature 1: JP-ANo. 2021-149905

### Non-patent Literature

Non-patent Literature 1: "Biomass Mark." Japan Organics Recycling Association. Accessed February 9, 2023. https://www.jora.jp/biomassmark/

### SUMMARY OF INVENTION

### Technical Problem

It is an object of this disclosure to provide a certification system and method in which a series of steps for certifying that a product uses biomass as a material are systematized.

### Solution to Problem

In order to achieve the above object, the certification system pertaining to this disclosure includes: an information processing terminal used by a producer of a product, the information processing terminal including a preliminary application unit that sends, to the certification server, preliminary application information including material composition information, which is information about each material making up the product, and biomass information relating to biomass used in the product, and a main application unit that sends, to the certification server, main application information that includes a measurement result relating to usage of biobased material used during production of the product and that is associated with the preliminary application information; and a certification server managed by a certification authority, the certification server including a receiving unit that receives the preliminary application information and the main application information sent from the information processing terminal, a checking unit that, when the main application information is received, checks a planned value of biomass content that represents a ratio of biomass used in the product and that is identified based on the preliminary application information against an actual measured value of the biomass content that is identified based on the main application information, and an issuing unit that issues a certificate indicating that the product is a product using biomass based on a result of the check by the checking unit. Because of this, a series of steps for certifying that a product uses biomass as a material can be systematized.

Furthermore, the material composition information may include a weight percent of each of the materials relative to the product, the biomass information may include a weight percent of biomass included in the biobased material, the preliminary application unit may include, in the preliminary application information, a planned value of the biomass content calculated based on the weight percent of each of the materials and the weight percent of the biomass, the main application unit may include, in the main application information, an actual measured value of the biomass content calculated based on the weight percent of each of the materials, the weight percent of the biomass, and the measurement result, and when a difference between the planned value of the biomass content and the actual measured value of the biomass content is within a predetermined range, the checking unit may notify the issuing unit of the result of the check granting certification. Because of this, the load of the checking process in the certification server can be alleviated.

Furthermore, the main application information may include the material composition information about the product that has actually been produced, and the checking unit may check the material composition information included in the preliminary application information against the material composition information included in the main application information. In this way, by performing not only a check between the planned value and the actual measured value of the biomass content but also a check in regard to the other materials, the reliability of the certification based on the result of the check can be enhanced.

Furthermore, the measurement result may be the usage of the biobased material as measured by a measuring instrument whose electronic calibration certificate relating to periodically conducted calibration is shared between the information processing terminal and the certification server or a measuring instrument whose measurement result is shared between the information processing terminal and the certification server at the time of measurement. Because of this, the reliability of the material composition information included in the main application information can be enhanced.

Furthermore, the main application information may include the material composition information about the product that has actually been produced, the material composition information including usage of, and identification information for, each of the materials, and the issuing unit may assign to the certificate an individual number associated with the material composition information included in the main application information. Because of this, certification can be executed more rigorously, because even if the product is the same, its certificate will not be valid if its material lots are different.

Furthermore, the issuing unit may assign, to the certificate, information indicating the biomass content that has been checked by the checking unit. Because of this, how much biomass is used in the product can also be certified.

Furthermore, the biomass information may include a certificate, issued by the manufacturer of the biobased material, for a weight percent of biomass included in the biobased material. Because of this, the reliability of the biomass information can be enhanced.

Furthermore, the preliminary application unit may encrypt the preliminary application information before sending it to the certification server, and the main application unit may encrypt the main application information before sending it to the certification server. Because of this, the preliminary application information and the main application information that include highly confidential material composition information can be prevented from leaking to the outside.

Furthermore, a certification method pertaining to this disclosure is a certification method executed by a certification system including an information processing terminal used by a producer of a product and a certification server managed by a certification authority, wherein: the information processing terminal: sends, to the certification server, preliminary application information including material composition information, which is information about each material making up the product, and biomass information relating to biomass used in the product, and sends, to the certification server, main application information that includes a measurement result relating to usage of biobased material used during production of the product and that is associated with the preliminary application information, and the certification server: receives the preliminary application information and the main application information sent from the information processing terminal, when the main application information is received, checks a planned value of biomass content that represents a ratio of biomass used in the product and that is identified based on the preliminary application information, against an actual measured value of the biomass content that is identified based on the main application information, and issues a certificate indicating that the product is a product using biomass based on the result of the check. Advantageous Effects of Invention

According to the certification system and method pertaining to this disclosure, a series of steps for certifying that a product uses biomass as a material can be systematized.

### BRIEF DESCRIPTION OF THE DRAWINGS

FIG. 1 is a block diagram showing the schematic configuration of a certification system pertaining to an embodiment.
FIG. 2 is a block diagram showing hardware configurations of an information processing terminal.
FIG. 3 is a block diagram showing an example of functional configurations of the information processing terminal.
FIG. 4 is a drawing showing an example of a preliminary application screen.
FIG. 5 is a drawing showing an example of a main application screen.
FIG. 6 is a block diagram showing an example of functional configurations of a certification server.
FIG. 7 is a drawing showing an example of an application DB.
FIG. 8 is a drawing showing an example of a certificate DB.
FIG. 9 is a sequence diagram showing the exchange of information between the information processing terminal and the certification server.
FIG. 10 is a flowchart showing an example of a preliminary application process.
FIG. 11 is a flowchart showing an example of a preliminary application reception process.
FIG. 12 is a flowchart showing an example of a main application process.
FIG. 13 is a flowchart showing an example of a certification process.

### DESCRIPTION OF EMBODIMENT

An example of an embodiment will be described below with reference to the drawings.

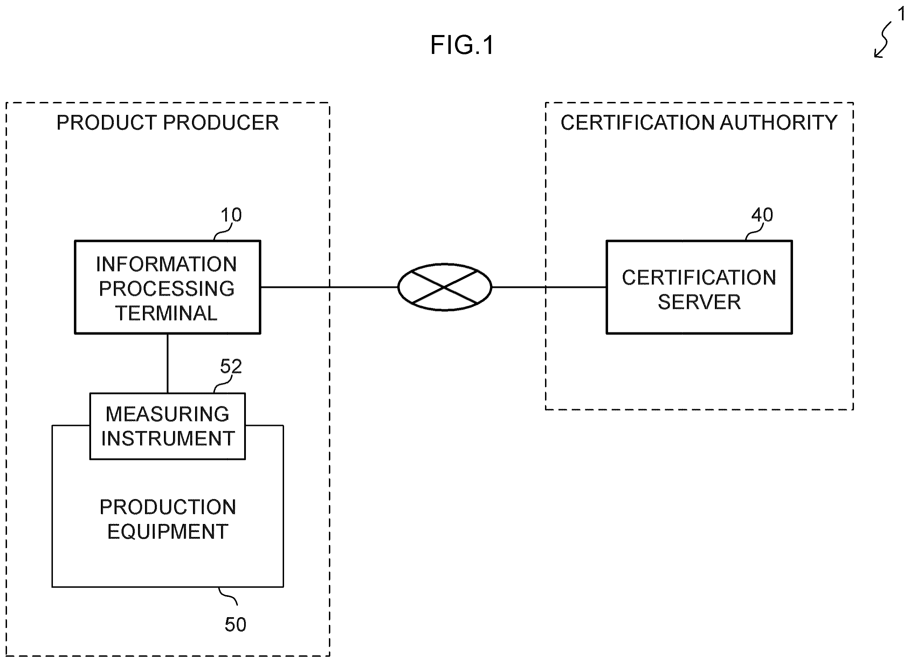

FIG. 1 is a block diagram showing the schematic configuration of a certification system 1 pertaining to this embodiment. As shown in FIG. 1, the certification system 1 includes an information processing terminal 10 used by a product producer and a certification server 40 managed by a certification authority. The information processing terminal 10 and the certification server 40 are interconnected via a network. Furthermore, the product producer has production equipment 50 for producing the product. The production equipment 50 includes a measuring instrument 52 for measuring the usage of each of the materials included in the product that is produced, and the measuring instrument 52 and the information processing terminal 10 are interconnected via a network.

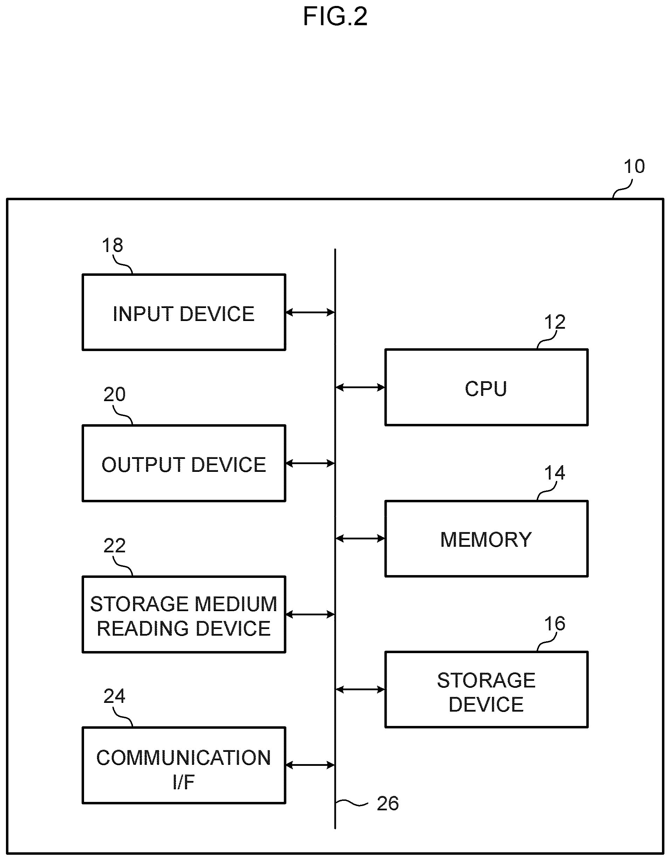

FIG. 2 is a block diagram showing hardware configurations of the information processing terminal 10. As shown in FIG. 2, the information processing terminal 10 has a central processing unit (CPU) 12, a memory 14, a storage device 16, an input device 18, an output device 20, a storage medium reading device 22, and a communication interface (I/F) 24. These configurations are communicably connected to each other via a bus 26.

The storage device 16 stores a certification program for executing processes relating to a certification method described below. The CPU 12 is a central arithmetic processing unit, executes various types of programs, and controls each configuration. That is, the CPU 12 reads programs from the storage device 16 and executes the programs using the memory 14 as a workspace. The CPU 12 controls each of the above configurations and performs various types of arithmetic processing in accordance with the programs stored in the storage device 16.

The memory 14 is configured by a random-access memory (RAM) and temporarily stores programs and data as a workspace. The storage device 16 is configured by a read-only memory (ROM), a hard disk drive (HDD), or a solid-state drive (SSD) and stores various types of programs, including an operating system, and various types of data.

The input device 18 is a device for performing various types of input, such as a keyboard and a mouse for example. The output device 20 is a device for outputting various types of information, such as a display and a printer for example. Employing a touch panel display for the output device 20 allows it to also function as the input device 18.

The storage medium reading device 22 reads data stored in various types of storage media, such as compact disc (CD)-ROMs, digital versatile disc (DVD)-ROMs, Blu-ray Discs, and universal serial bus (USB) memories, and writes data to the storage media. The communication I/F 24 is an interface for communicating with other devices and uses a standard such as Ethernet (registered trademark), FDDI, or Wi-Fi (registered trademark).

The hardware configurations of the certification server 40 are generally the same as the hardware configurations of the information processing terminal 10 shown in FIG. 2, so detailed description will be omitted.

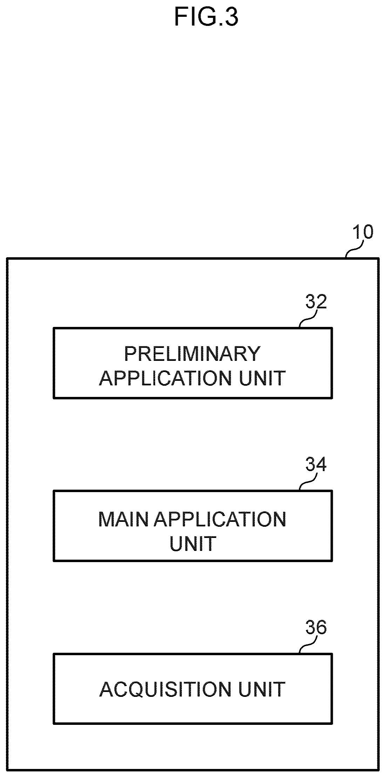

Next, functional configurations of the information processing terminal 10 will be described. FIG. 3 is a block diagram showing an example of the functional configurations of the information processing terminal 10. As shown in FIG. 3, the information processing terminal 10 includes, as functional configurations, a preliminary application unit 32, a main application unit 34, and an acquisition unit 36. Each functional configuration is realized by the CPU 12 reading the certification program stored in the storage device 16, loading it to the memory 14, and executing it.

The preliminary application unit 32 sends to the certification server 40 preliminary application information including material composition information, which is information about each of the materials making up the product, and biomass information relating to biomass used in the product. The material composition information may include the weight percent (hereinafter also written as "weight %") of each of the materials relative to the product, and the biomass information may include the weight % of biomass included in a biobased material. Furthermore, the biomass information may include a certificate, issued by the manufacturer of the biobased material, for the weight % of biomass included in the biobased material. Moreover, the preliminary application information may include a planned value of the biomass content representing the ratio of biomass used in the product and calculated based on the weight % of each of the materials and the weight % of the biomass.

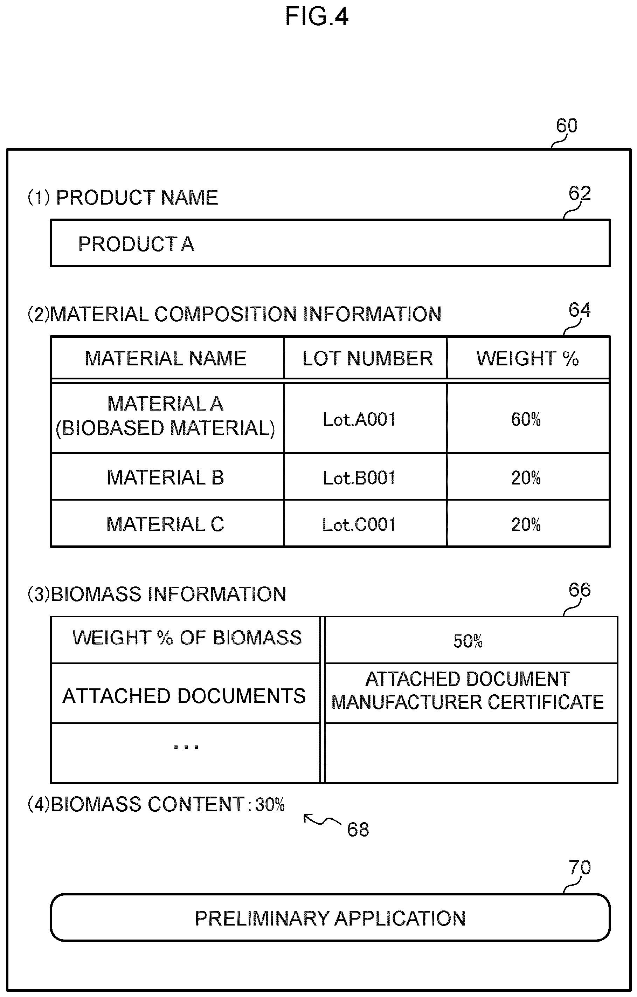

Specifically, the preliminary application unit 32 displays a preliminary application screen 60 such as shown in FIG. 4 for example on a display that is an example of the output device 20 of the information processing terminal 10 and receives the preliminary application information from a user such as a person-in-charge at the product producer. In the example of FIG. 4, the preliminary application screen 60 includes an input area 62 for inputting the product name, an input area 64 for inputting the material composition information, and an input area 66 for inputting the biomass information.

FIG. 4 shows an example where the input area 64 for inputting the material composition information is a composition table including the items of material name, lot number, and weight % for each of the materials making up the product. It will be noted that the items in the composition table are not limited to the example of FIG. 4 and may include other information such as manufacturer information for example. Furthermore, the weight % is not limited to being designated by a specific value and may be designated by a range represented by an upper limit and a lower limit. To the input area 66 for inputting biomass information are input the weight % of the biomass included in the biobased material and information relating to attached documents such as a certificate issued by a manufacturer. It will be noted that the information included in the biomass information is not limited to the example of FIG. 4 and may include other information such as manufacturer information, CAS registry number, Chemical Substances Control Law number, and purity, for example.

Furthermore, the preliminary application screen 60 includes a display area 68, in which the planned value of the biomass content that has been calculated is displayed, and a preliminary application button 70, which is selected when finalizing the preliminary application information and sending it to the certification server 40. The preliminary application unit 32 calculates the planned value of the biomass content when at least the weight % of the biobased material is input to the composition table in the input area 64 and the weight % of biomass is input to the input area 66. Specifically, the preliminary application unit 32 calculates the biomass content by multiplying the weight % of the biobased material by the weight % of biomass. In the example of FIG. 4, the biomass content is calculated by multiplying 60% by 50%, which is equal to 30%. The preliminary application unit 32 displays the calculated biomass content in the display area 68.

When the preliminary application button 70 is selected, the preliminary application unit 32 generates the preliminary application information including the information that has been input to each input area and the planned value of the biomass content that has been calculated. Specifically, the preliminary application unit 32 generates preliminary application information including the product name, the composition table showing the planned values of the material composition information, the biomass information, and the planned value of the biomass content. The preliminary application unit 32 sends the generated preliminary application information to the certification server 40. At this time, the preliminary application unit 32 may encrypt the preliminary application information before sending it. It will be noted that if there is a missing input item at the stage when the preliminary application button 70 is selected, the preliminary application unit 32 may display a message prompting the user to input the missing information.

Furthermore, the preliminary application unit 32 acquires an application ID, which is identification information identifying the preliminary application and sent from the certification server 40 in response to the preliminary application information being sent. The preliminary application unit 32 associates the acquired application ID with the sent preliminary application information and stores it in a predetermined storage region in the information processing terminal 10.

The main application unit 34 sends to the certification server 40 main application information that includes a measurement result relating to the usage of the biobased material used during production of the product and is associated with the preliminary application information. Furthermore, the main application information may also include the material composition information about the product that has actually been produced, the material composition information including the usage of, and identification information such as lot numbers for, each of the materials. Measurement results relating to the usage of each of the materials are obtained by measurement by the measuring instrument 52. For example, the information processing terminal 10 acquires the measurement results relating to the usages as measured by the measuring instrument 52 during production of the product and stores them in a predetermined storage region. The main application unit 34 acquires the measurement results by reading them from the predetermined storage region. It will be noted that, in addition to the usages measured by the measuring instrument 52, the measurement results also include material information, such as material names, lot numbers, and weight %, and the date of the measurement. Furthermore, associating the application ID with the measurement results allows the information processing terminal 10 to manage the measurement results associated with the preliminary application so that they are acquired at the time of the main application corresponding to the preliminary application.

The measuring instrument 52 is, for example, an electronic balance. An electronic calibration certificate relating to periodically conducted calibration of the measuring instrument 52 is shared between the information processing terminal 10 and the certification server 40. For example, the issued calibration certificate is digitized and stored in a predetermined storage region in the information processing terminal 10 and is also sent to the certification server 40 and stored in a predetermined storage region in the certification server 40. Furthermore, the measurement results obtained by the measuring instrument 52 may also be shared between the information processing terminal 10 and the certification server 40 at the time of the measurement.

Furthermore, the main application information may also include, in the main application information, an actual measured value of the biomass content calculated based on the weight % of the biobased material, which is based on the measurement result, and the weight % of biomass.

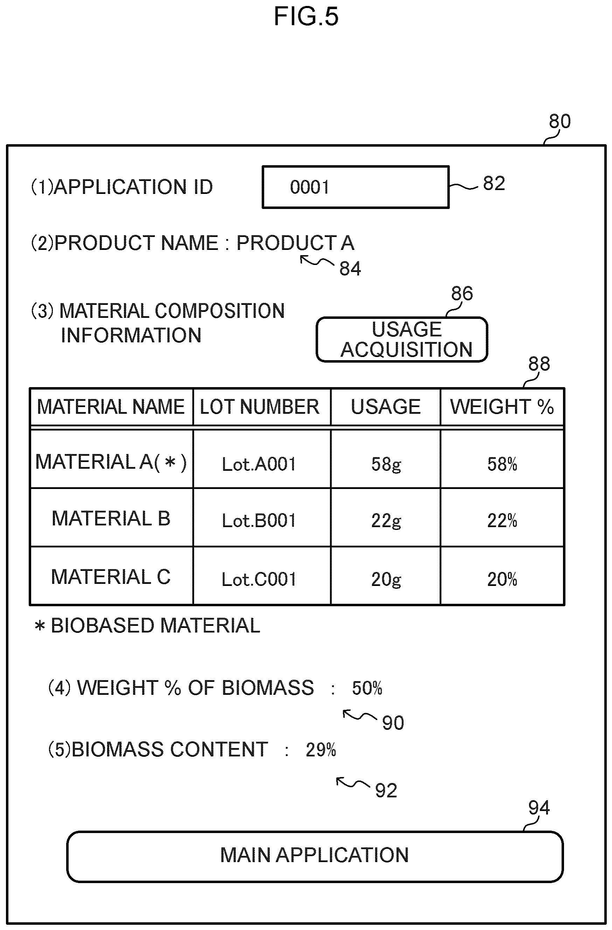

Specifically, the main application unit 34 displays a main application screen 80 such as shown in FIG. 5 for example on a display that is an example of the output device 20 of the information processing terminal 10 and receives the main application information from a user such as a person-in-charge at the product producer. In the example of FIG. 5, the application screen 80 includes an input area 82 to which the application ID is input, a display area 84 in which the product name is displayed, a usage acquisition button 86 for acquiring the usage of each of the materials from the measurement results of the measuring device 52, and a composition table display area 88. Furthermore, the main application screen 80 includes a display area 90 for the weight % of biomass, a display area 92 for the actual measured value of the biomass content, and a main application button 94 that is selected when finalizing the main application information and sending it to the certification server 40.

When the application ID is input to the input area 82, the main application unit 34 reads the preliminary application information stored in the predetermined storage region in association with the application ID that has been input. Based on the read preliminary application information, the main application unit 34 displays the product name in the display area 84, displays the material names and lot numbers in the composition table in the display area 88, and displays the weight % of biomass in the display area 90.

Furthermore, when the usage acquisition button 86 is selected, the main application unit 34 acquires the measurement results relating to the usages of each of the materials stored in the predetermined storage region and displays them in the "Usage" column of the composition table in the display area 88. The main application unit 34 calculates actual measured values of the weight % of each of the materials including the biobased material based on the acquired usages and displays them in the "Weight %" column of the composition table in the display area 88. Moreover, the main application unit 34 calculates an actual measured value of the biomass content using the calculated weight % of the biobased material and the weight % of biomass displayed in the display area 90 and displays it in the display area 92. It will be noted that the measurement results once acquired by the selection of the usage acquisition button 86 may be restricted so that they cannot be acquired again. That is, restricting one measurement result for use only one time in the main application prevents unauthorized use of the measurement results. Furthermore, the measurement results may be stored as bar codes or two-dimensional codes for example, and the measurement results may be acquired by reading this information at the time of the main application.

When the main application button 94 is selected, the main application unit 34 generates the main application information from the information displayed in each of the display areas, including the actual measured value of the biomass content that has been calculated. Specifically, the main application unit 34 generates the main application information including the application ID, the composition table showing the actual measured values of the material composition information, the biomass information, and the actual measured value of the biomass content. The main application unit 34 sends the generated main application information to the certification server 40. At this time, the main application unit 34 may encrypt the main application information before sending it. It will be noted that if there is a deficiency such as the usage of each of the materials not being acquired at the stage when the main application button 94 is selected, the main application unit 34 may display a message prompting the user to correct the deficiency.

The acquisition unit 36 acquires a certificate sent from the certification server 40. Furthermore, if certification by the certification server 40 becomes denied, the acquisition unit 36 acquires a notification of a denial of certification sent from the certification server 40.

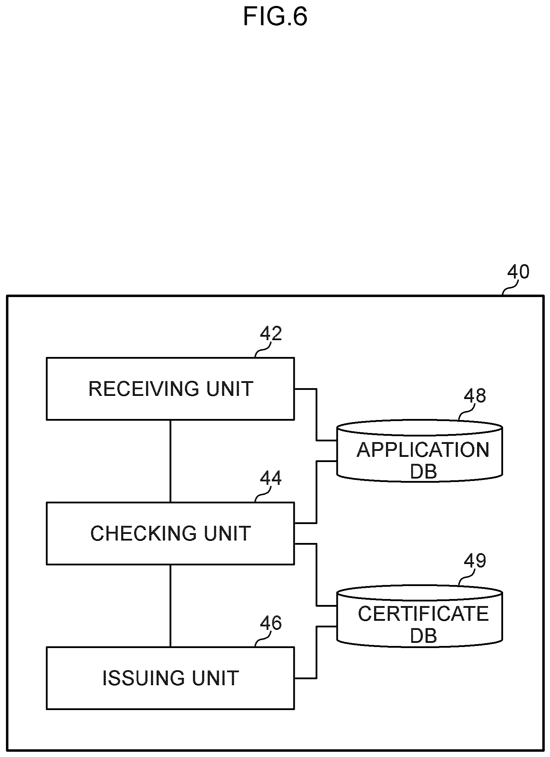

Next, functional configurations of the certification server 40 will be described. FIG. 6 is a block diagram showing an example of the functional configurations of the certification server 40. As shown in FIG. 6, the certification server 40 includes, as functional configurations, a receiving unit 42, a checking unit 44, and an issuing unit 46. Furthermore, an application database (DB) 48 and a certificate DB 49 are stored in a predetermined storage region in the certification server 40. Each functional configuration is realized by a CPU reading out a certification program stored in a storage device, loading it to a memory, and executing it.

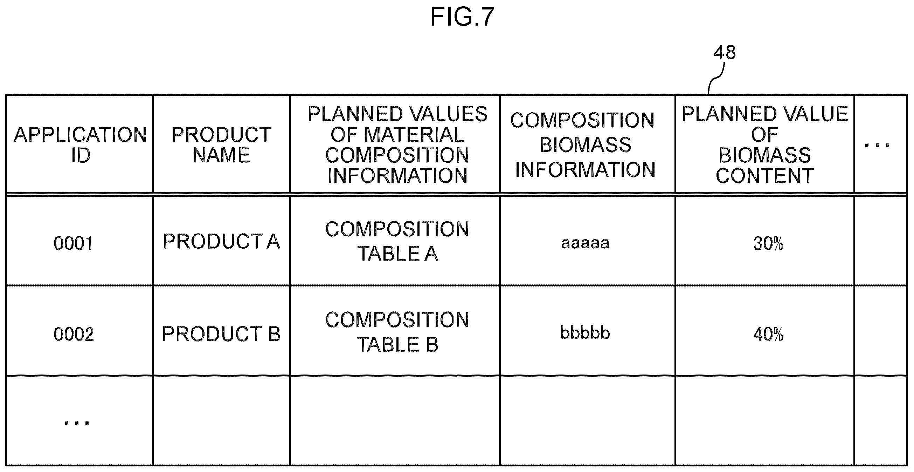

The receiving unit 42 receives the preliminary application information sent from the information processing terminal 10, assigns an application ID to the received preliminary application information, and stores the preliminary application information and the application ID in the application DB 48. FIG. 7 shows an example of the application DB 48. In the example of FIG. 7, the application DB 48 includes items such as "Application ID," "Product Name," "Planned Values of Material Composition Information," "Biomass Information," and "Planned Value of Biomass Content," and each piece of information included in the preliminary application information is stored in the corresponding item column. Furthermore, the receiving unit 42 notifies the information processing terminal 10 of the assigned application ID. Furthermore, the receiving unit 42 receives the main application information sent from the information processing terminal 10 and delivers it to the checking unit 44.

When the main application information is delivered from the receiving unit 42, the checking unit 44 reads from the application DB 48 the preliminary application information stored in association with the application ID included in the main application information. The checking unit 44 checks the planned value of the biomass content included in the read preliminary application information against the actual measured value of the biomass content included in the main application information. Specifically, when the difference between the planned value and the actual measured value of the biomass content is within a predetermined range, the checking unit 44 notifies the issuing unit 46 of the result of the check granting certification. On the other hand, when the difference between the planned value and the actual measured value of the biomass content exceeds the predetermined range, the checking unit 44 notifies the information processing terminal 10 of a denial of certification.

In addition to checking the planned value and the actual measured value of the biomass content, the checking unit 44 may also check the planned values of the material composition information included in the preliminary application information against the actual measured values of the material composition information included in the main application information. Specifically, the checking unit 44 performs the check based on whether the materials that are used match each other and whether the difference between the planned value and the actual measured value of the weight % of each of the materials is within a predetermined range. The checking unit 44 may comprehensively judge the result of the check that is based on the difference between the planned value and the actual measured value of the biomass content and the result of the check that is based on the differences between the planned values and the actual measured values of the material composition information to decide on a final check result. For example, the checking unit 44 may, as a comprehensive judgment, deny certification when the difference between the planned value and the actual measured value of either the biomass content or the material composition information exceeds a predetermined range. Furthermore, for example, the checking unit 44 may also perform the judgment by relaxing the criteria for the material composition information (e.g., by widening the predetermined range) if the difference between the planned value and the actual measured value of the biomass content is within the predetermined range.

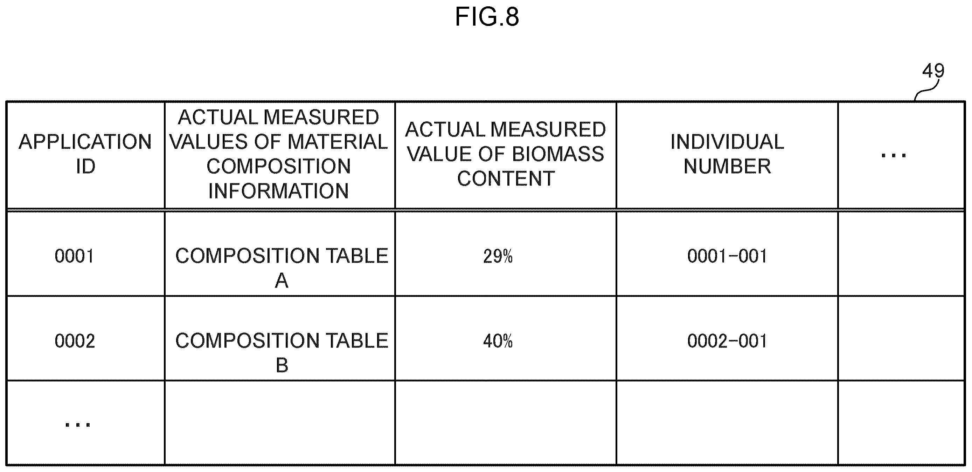

When the result of the check is to grant certification, the checking unit 44 stores the main application information in the certificate DB 49. FIG. 8 shows an example of the certificate DB 49. In the example of FIG. 8, the certificate DB 49 includes items such as "Application ID," "Actual Measured Values of Material Composition Information," and "Actual Measured Value of Biomass Content," and each piece of information included in the main application information is stored in the corresponding item column. Furthermore, the checking unit 44 assigns an individual number to the main application information uniquely determined from the application ID, the actual measured values of the material composition information, and the actual measured value of the biomass content, and stores it in the "Individual Number" column. The individual number is identification information for issuing a different certificate for each material lot, assuming a case where the same application ID is used for the same product and, if the lot of the material used is changed, an application for the content change is received. It will be noted that the items included in the certificate DB 49 are not limited to the example of FIG. 8, and the certificate DB 49 may also store information such as the expiration date of the certificate.

The issuing unit 46 issues a certificate indicating that the product is a product using biomass based on the result of the check by the checking unit 44. The certificate may be in any form, such as a document, a mark, or a two-dimensional code, and all are issued as electronic information. Specifically, the issuing unit 46 creates the certificate by referencing the information stored in the certificate DB 49. For example, as the certificate, the issuing unit 46 creates image data including a certification mark, the individual number, and a label indicating the biomass content. The issuing unit 46 sends the created certificate to the information processing terminal 10.

Next, the action of the certification system 1 pertaining to this embodiment will be described.

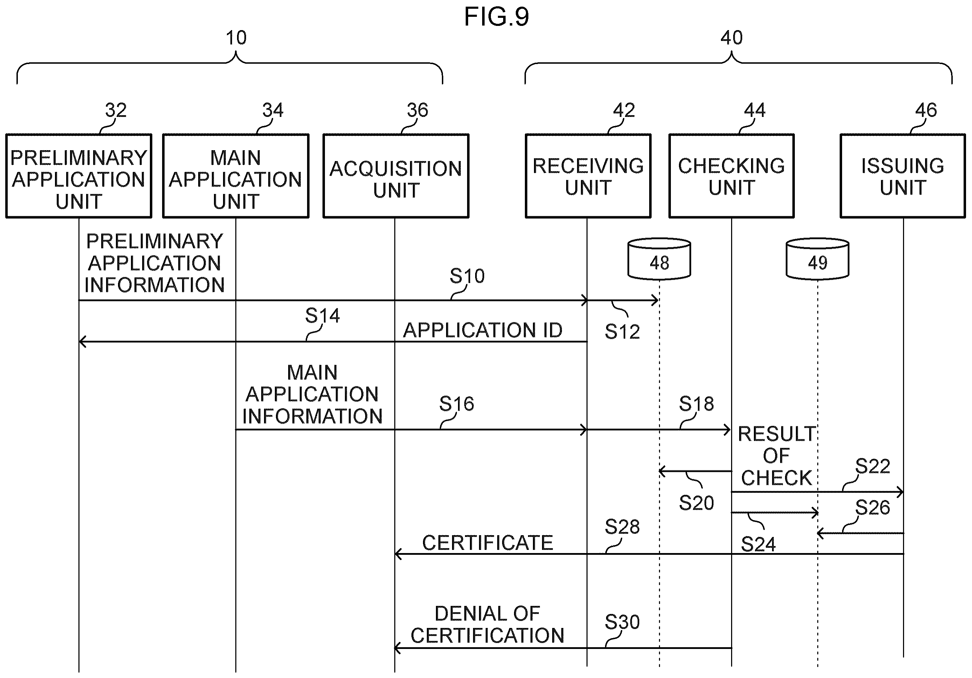

FIG. 9 is a sequence diagram showing the exchange of information between the information processing terminal 10 and the certification server 40.

First, at the time of a preliminary application, the preliminary application unit 32 of the information processing terminal 10 creates the preliminary application information and sends it to the certification server 40 (step S10). When the receiving unit 42 of the certification server 40 receives the preliminary application information, it associates an application ID with the preliminary application information and stores the preliminary application information and the application ID in the application DB 48 (step S12). Furthermore, the receiving unit 42 notifies the information processing terminal 10 of the application ID, and the preliminary application unit 32 associates the application ID with the preliminary application information and stores it in a predetermined storage region (step S14).

Next, at the time of a main application, the main application unit 34 creates the main application information and sends it to the certification server 40 (step S16). When the receiving unit 42 receives the main application information, it delivers the main application information to the checking unit 44 of the certification server 40 (step S18). The checking unit 44 reads the preliminary application information corresponding to the main application information from the application DB 48 and checks the preliminary application information against the main application information (step S20). Then, the checking unit 44 notifies the issuing unit 46 of the certification server 40 of the result of the check (step S22) and, when certification is granted, stores the main application information in the certificate DB 49 (step S24).

The issuing unit 46 creates a certificate by referencing the certificate DB 49 (step S26) and sends the created certificate to the information processing terminal 10, and the acquisition unit 36 of the information processing terminal 10 acquires the certificate (step S28). On the other hand, when the checking unit 44 judges as a result of the check that certification is denied, it notifies the information processing terminal 10 thereof, and the acquisition unit acquires the notification (step S30).

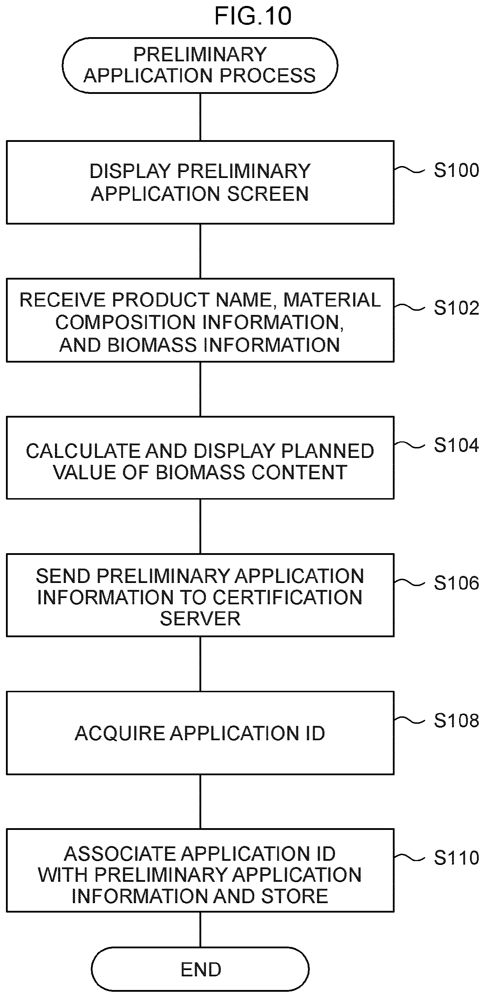

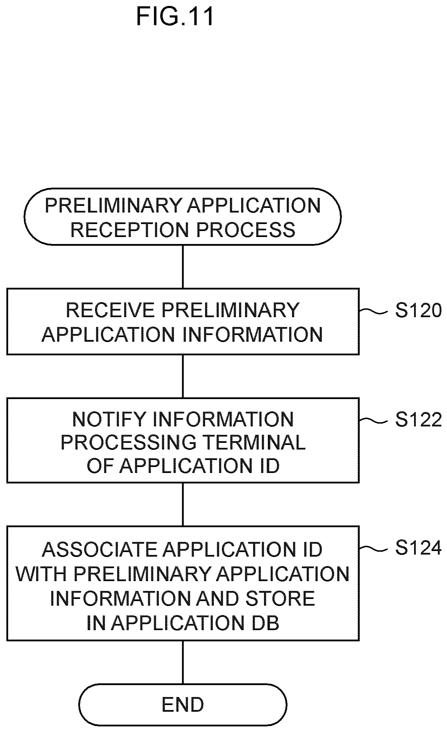

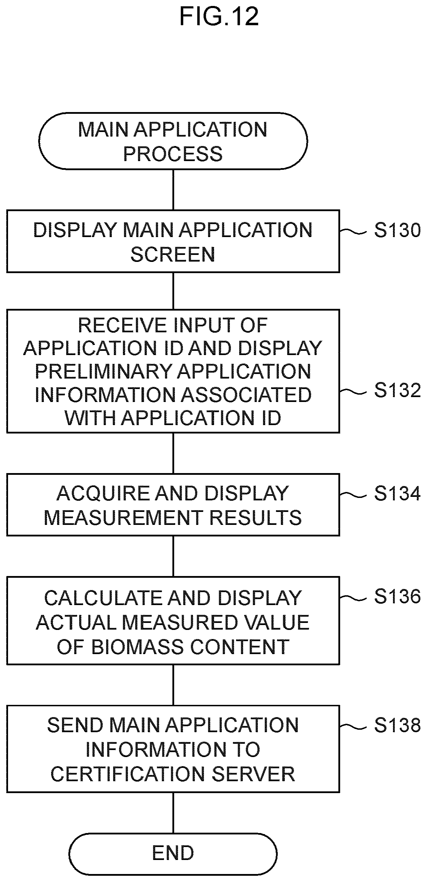

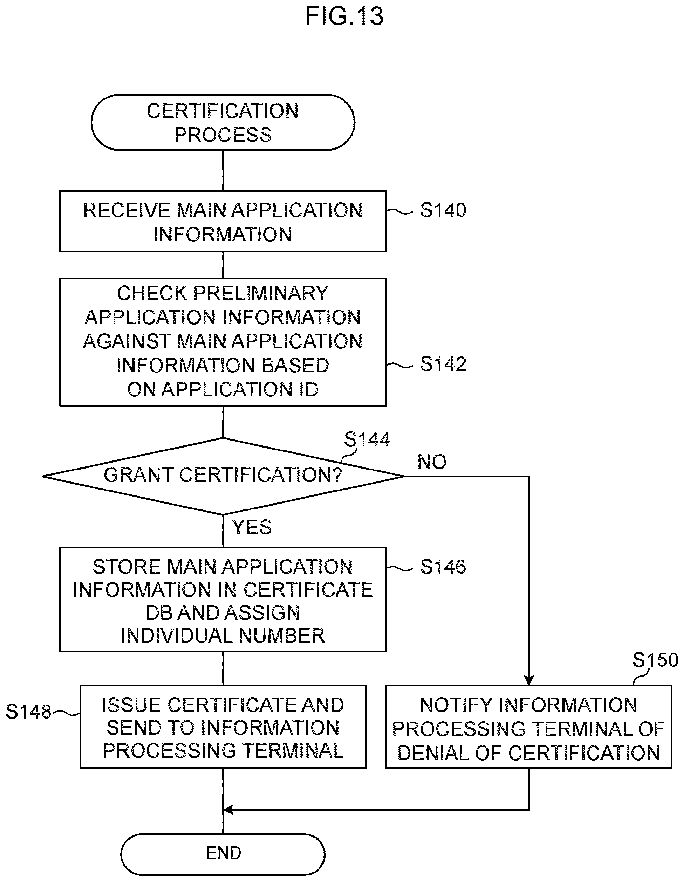

In the certification method executed by the certification system 1, at the time of a preliminary application, the information processing terminal 10 executes a preliminary application process shown in FIG. 10, and the certification server 40 executes a preliminary application reception process shown in FIG. 11. Additionally, at the time of a main application, the information processing terminal 10 executes a main application process shown in FIG. 12, and the certification server 40 executes a certification process shown in FIG. 13. The preliminary application process, the preliminary application reception process, the main application process, and the certification process will each be described in detail below.

First, the preliminary application process shown in FIG. 10 will be described.

In step S100, the preliminary application unit 32 displays the preliminary application screen 60 such as shown in FIG. 4 for example on a display that is an example of the output device 20 of the information processing terminal 10. Next, in step S102, the preliminary application unit 32 receives the product name, the material composition information, and the biomass information via the preliminary application screen 60.

Next, in step S104, the preliminary application unit 32 calculates the planned value of the biomass content in the product based on the weight % of the biobased material included in the received material composition information and the weight % of biomass included in the biomass information, and displays it on the preliminary application screen 60. Next, in step S106, when the preliminary application button 70 is selected on the preliminary application screen 60, the preliminary application unit 32 generates the preliminary application information including the product name, the composition table showing the planned values of the material composition information, the biomass information, and the planned value of the biomass content. Then, the preliminary application unit 32 sends the generated preliminary application information to the certification server 40.

Next, in step S108, the preliminary application unit 32 acquires the application ID sent from the certification server 40 in response to the preliminary application information being sent. Next, in step S110, the preliminary application unit 32 associates the acquired application ID with the preliminary application information that it sent and stores it in a predetermined storage region in the information processing terminal 10, and the preliminary application process ends.

Next, the preliminary application reception process shown in FIG. 11 will be described.

In step S120, the receiving unit 42 receives the preliminary application information sent from the information processing terminal 10. Next, in step S122, the receiving unit 42 notifies the information processing terminal 10 of the application ID assigned to the received preliminary application information. Next, in step S124, the receiving unit 42 associates the application ID with the received preliminary application information and stores the preliminary application information and the application ID in the application DB 48, and the preliminary application reception process ends.

Next, the main application process shown in FIG. 12 will be described.

In step S130, the main application unit 34 displays the main application screen 80 such as shown in FIG. 5 for example on a display that is an example of the output device 20 of the information processing terminal 10. Next, in step S132, the main application unit 34 receives input of the application ID and reads the preliminary application information stored in a predetermined storage region in association with the received application ID. Then, based on the read preliminary application information, the main application unit 34 displays the product name, the material names and lot numbers of the composition table, and the weight % of biomass on the main application screen 80.

Next, in step S134, when the usage acquisition button 86 is selected, the main application unit 34 acquires the measurement results relating to the usages of each of the materials stored in a predetermined storage region. Then, based on the acquired usages, the main application unit 34 calculates the actual measured values of the weight % of each of the materials including the biobased material and displays them on the application screen 80. Next, in step S136, the main application unit 34 calculates the actual measured value of the biomass content using the calculated weight % of the biobased material and the weight % of biomass and displays it on the application screen 80.

Next, in step S138, when the main application button 94 is selected on the main application screen 80, the main application unit 34 generates the main application information including the application ID, the composition table showing the actual measured values of the material composition information, the biomass information, and the actual measured value of the biomass content. Then, the main application unit 34 sends the generated main application information to the certification server 40, and the main application process ends.

Next, the certification process shown in FIG. 13 will be described.

In step S140, the receiving unit 42 receives the main application information sent from the information processing terminal 10 and delivers it to the checking unit 44. Next, in step S142, the checking unit 44 reads from the application DB 48 the preliminary application information stored in association with the application ID included in the main application information. Then, the checking unit 44 checks the planned values of the biomass content and the material composition information included in the read preliminary application information against the actual measured values of the biomass content and the material composition information included in the received main application information.

Next, in step S144, the checking unit 44 determines whether to grant certification based on the result of the check in step S142. For example, the checking unit 44 determines to grant certification when the differences between the planned values and the actual measured values are within a predetermined range and denies certification when the differences exceed the predetermined range. When certification is granted, the process proceeds to step S146, and when certification is denied, the process proceeds to step S150.

In step S146, the checking unit 44 stores the main application information in the certificate DB 49 and assigns an individual number. Next, in step S148, the issuing unit 46 references the information stored in the certificate DB 49 and creates, as a certificate, image data including a certification mark, the individual number, and a label indicating the biomass content, for example. Then, the issuing unit 46 sends the created certificate to the information processing terminal 10, and the certification process ends.

On the other hand, in step S150, the checking unit 44 notifies the information processing terminal 10 of the denial of certification, and the certification process ends.

The product producer labels the product with the acquired certificate or indicates that the product has been issued a certificate. Furthermore, in regard to a product that has been issued a certificate, regular audits or the like are conducted to check whether the information stored in the certificate DB 49 matches the actual production status, thereby ensuring the validity of the certificate.

As described above, the certification system pertaining to this embodiment includes an information processing terminal used by a producer of a product and a certification server managed by a certification authority. The information processing terminal sends to the certification server preliminary application information including material composition information, which is information about each of the materials making up the product, and biomass information relating to biomass used in the product. Additionally, the information processing terminal sends to the certification server main application information that includes a measurement result relating to the usage of biobased material used during production of the product and is associated with the preliminary application information. The certification server receives the preliminary application information and the main application information sent from the information processing terminal. When the main application information is received, the certification server checks a planned value of biomass content that is identified based on the preliminary application information against an actual measured value of the biomass content that is identified based on the main application information. Then, the certification server issues a certificate indicating that the product is a product using biomass based on the result of the check by a checking unit. Because of this, a series of steps for certifying that a product uses biomass as a material can be systematized.

It will be noted that although in the above embodiment a case was described where the planned value and the actual measured value of the biomass content were calculated by the information processing terminal, they may be calculated by the certification server based on the material composition information and the biomass information sent from the information processing terminal.

Furthermore, although in the above embodiment a case was described where a check is also performed between the planned values and the actual measured values of the material composition information, the certification system need only perform at least a check based on the planned value and the actual measured value of the biomass content.

Furthermore, although in the above embodiment a case was described where an individual number is assigned and a certificate is issued for each material lot, a certificate may be issued in product units.

Although in the above embodiment a case was described where a certificate is issued indicating how much biomass is used in the product by indicating the biomass content on the certificate, the certificate need only certify at least that the product uses biomass.

Furthermore, the processes that the CPUs executed by reading software (programs) in the above embodiment may also be executed by various types of processors other than a CPU. Examples of processors in this case include programmable logic devices (PLDs) whose circuit configuration can be changed after manufacture, such as field-programmable gate arrays (FPGAs), and dedicated electrical circuits that are processors having a circuit configuration dedicatedly designed for executing specific processes, such as application-specific integrated circuits (ASICs). Furthermore, the processes may be executed by one of these various types of processors or may be executed by a combination of two or more processors of the same type or different types (e.g., multiple FPGAs, a combination of a CPU and an FPGA, etc.). Furthermore, the hardware structures of these various types of processors are more specifically electrical circuits in which circuit elements such as semiconductor elements are combined.

Furthermore, although in the above embodiment an aspect was described where the certification program was stored (installed) beforehand in a storage device, the certification program is not limited to this. The program may also be provided in a form in which it is stored in a storage medium such as a CD-ROM, a DVD-ROM, or a USB memory. Furthermore, the program may also take a form in which it is downloaded via a network from an external device.

Below, supplementary items are described.

### (Supplementary Item 1)

A certification system including an information processing terminal used by a producer of a product and a certification server managed by a certification authority, wherein
the information processing terminal includes
   a preliminary application unit that sends to the certification server preliminary application information including material composition information, which is information about each of the materials making up the product, and biomass information relating to biomass used in the product and
   a main application unit that sends to the certification server main application information that includes a measurement result relating to the usage of biobased material used during production of the product and is associated with the preliminary application information, and
the certification server includes
   a receiving unit that receives the preliminary application information and the main application information sent from the information processing terminal,
   a checking unit that, when the main application information is received, checks a planned value of biomass content that represents the ratio of biomass used in the product and is identified based on the preliminary application information against an actual measured value of the biomass content that is identified based on the main application information, and
   an issuing unit that issues a certificate indicating that the product is a product using biomass based on the result of the check by the checking unit.

### (Supplementary Item 2)

The certification system of supplementary item 1, wherein
the material composition information includes the weight percent of each of the materials relative to the product,
the biomass information includes the weight percent of biomass included in the biobased material,
the preliminary application unit includes, in the preliminary application information, a planned value of the biomass content calculated based on the weight percent of each of the materials and the weight percent of the biomass,
the main application unit includes, in the main application information, an actual measured value of the biomass content calculated based on the weight percent of each of the materials, the weight percent of the biomass, and the measurement result, and
when the difference between the planned value of the biomass content and the actual measured value of the biomass content is within a predetermined range, the checking unit notifies the issuing unit of the result of the check granting certification.

### (Supplementary Item 3)

The certification system of supplementary item 1 or supplementary item 2, wherein
the main application information includes the material composition information about the product that has actually been produced, and
the checking unit checks the material composition information included in the preliminary application information against the material composition information included in the main application information.

### (Supplementary Item 4)

The certification system of any one of supplementary item 1 to supplementary item 3, wherein the measurement result is the usage of the biobased material as measured by a measuring instrument whose electronic calibration certificate relating to periodically conducted calibration is shared between the information processing terminal and the certification server or a measuring instrument whose measurement result is shared between the information processing terminal and the certification server at the time of measurement.

### (Supplementary Item 5)

The certification system of any one of supplementary item 1 to supplementary item 4, wherein
the main application information includes the material composition information about the product that has actually been produced, the material composition information including the usage of, and identification information for, each of the materials, and
the issuing unit assigns to the certificate an individual number associated with the material composition information included in the main application information.

### (Supplementary Item 6)

The certification system of any one of supplementary item 1 to supplementary item 5, wherein the issuing unit assigns to the certificate information indicating the biomass content that has been checked by the checking unit.

### (Supplementary Item 7)

The certification system of any one of supplementary item 1 to supplementary item 6, wherein the biomass information includes a certificate, issued by the manufacturer of the biobased material, for the weight percent of biomass included in the biobased material.

### (Supplementary Item 8)

The certification system of any one of supplementary item 1 to supplementary item 7, wherein
the preliminary application unit encrypts the preliminary application information before sending it to the certification server, and
the main application unit encrypts the main application information before sending it to the certification server.

### Reference signs list

- 1: Certification System

- 10: Information Processing Terminal
- 12: CPU
- 14: Memory
- 16: Storage Device
- 18: Input Device
- 20: Output Device
- 22: Storage Medium Reading Device
- 24: Communication I/F
- 26: Bus
- 32: Preliminary Application Unit
- 34: Main Application Unit
- 36: Acquisition Unit
- 40: Certification Server
- 42: Receiving Unit
- 44: Checking Unit
- 46: Issuing Unit
- 48: Application DB
- 49: Certificate DB
- 50: Production Equipment
- 52: Measuring Instrument
- 60: Preliminary Application Screen
- 80: Main Application Screen

## Claims

1. A certification system including an information processing terminal used by a producer of a product and a certification server managed by a certification authority, wherein:
the information processing terminal includes:
a preliminary application unit that sends, to the certification server, preliminary application information including material composition information, which is information about each material making up the product, and biomass information relating to biomass used in the product, and
a main application unit that sends, to the certification server, main application information that includes a measurement result relating to usage of biobased material used during production of the product and that is associated with the preliminary application information; and
the certification server includes:
a receiving unit that receives the preliminary application information and the main application information sent from the information processing terminal,
a checking unit that, when the main application information is received, checks a planned value of biomass content that represents a ratio of biomass used in the product and that is identified based on the preliminary application information, against an actual measured value of the biomass content that is identified based on the main application information, and
an issuing unit that issues a certificate indicating that the product is a product using biomass based on a result of the check by the checking unit.

2. The certification system of claim 1, wherein:
the material composition information includes a weight percent of each of the materials relative to the product,
the biomass information includes a weight percent of biomass included in the biobased material,
the preliminary application unit includes, in the preliminary application information, a planned value of the biomass content calculated based on the weight percent of each of the materials and the weight percent of the biomass,
the main application unit includes, in the main application information, an actual measured value of the biomass content calculated based on the weight percent of each of the materials, the weight percent of the biomass, and the measurement result, and
when a difference between the planned value of the biomass content and the actual measured value of the biomass content is within a predetermined range, the checking unit notifies the issuing unit of the result of the check granting certification.

3. The certification system of claim 1 or claim 2, wherein:
the main application information includes the material composition information about the product that has actually been produced, and
the checking unit checks the material composition information included in the preliminary application information against the material composition information included in the main application information.

4. The certification system of claim 1 or claim 2, wherein the measurement result is the usage of the biobased material as measured by a measuring instrument whose electronic calibration certificate relating to periodically conducted calibration is shared between the information processing terminal and the certification server or a measuring instrument whose measurement result is shared between the information processing terminal and the certification server at the time of measurement.

5. The certification system of claim 1 or claim 2, wherein:
the main application information includes the material composition information about the product that has actually been produced, the material composition information including usage of, and identification information for, each of the materials, and
the issuing unit assigns, to the certificate, an individual number associated with the material composition information included in the main application information.

6. The certification system of claim 1 or claim 2, wherein the issuing unit assigns, to the certificate, information indicating the biomass content that has been checked by the checking unit.

7. The certification system of claim 1 or claim 2, wherein the biomass information includes a certificate, issued by a manufacturer of the biobased material, for a weight percent of biomass included in the biobased material.

8. The certification system of claim 1 or claim 2, wherein:
the preliminary application unit encrypts the preliminary application information before sending it to the certification server, and
the main application unit encrypts the main application information before sending it to the certification server.

9. A certification method executed by a certification system including an information processing terminal used by a producer of a product and a certification server managed by a certification authority, wherein:
the information processing terminal:
sends, to the certification server, preliminary application information including material composition information, which is information about each material making up the product, and biomass information relating to biomass used in the product, and
sends, to the certification server, main application information that includes a measurement result relating to usage of biobased material used during production of the product and that is associated with the preliminary application information; and
the certification server:
receives the preliminary application information and the main application information sent from the information processing terminal,
when the main application information is received, checks a planned value of biomass content that represents a ratio of biomass used in the product and that is identified based on the preliminary application information, against an actual measured value of the biomass content that is identified based on the main application information, and
issues a certificate indicating that the product is a product using biomass based on the result of the check.
